# EUROPÄISCHE PATENTSCHRIFT

(11) **EP 0 936 292 B1**
(45) Veröffentlichungstag und Bekanntmachung des Hinweises auf die Patenterteilung: **25.02.2004**
(21) Anmeldenummer: 98811176.1
(22) Anmeldetag: 26.11.1998
(51) Int. Cl.: D01G 19/26

(54) **Rundkammantrieb**
Circular comb drive
Entrainement de peigne circulaire

(30) Priorität: 12.02.1998 CH 35198
(43) Veröffentlichungstag der Anmeldung: 18.08.1999
(73) Patentinhaber: MASCHINENFABRIK RIETER AG, CH-8406 Winterthur (CH)
(72) Erfinder: Zollinger, Thomas, 8180 Bülach (CH); Sigrist, Thomas, 8400 Winterthur (CH)

(56) Entgegenhaltungen:
- EP-A- 0 573 121
- WO-A-95/27816
- US-A- 1 379 789
- US-A- 1 488 495
- US-A- 2 583 281

## Beschreibung

Die Erfindung bezieht sich auf eine Kämmaschine mit einem angetriebenen Zangenaggregat und einem mit der Bewegung des Zangenaggregates synchronisiert und diskontinuierlich angetriebenen Rundkamm.

Aus der Patentliteratur sind Einrichtungen bekannt, wobei der Rundkamm einer Kämmaschine eine diskontinuierliche Bewegung während eines Kämmzykluses durchführt, um eine Anpassung an die Bewegungsformen bestimmter Arbeitselemente und an bestimmte technologische Bedingungen anzupassen. Eine derartige Einrichtung ist z.B. aus der EP-754 253 bekannt, wobei der Rundkamm über einen elektrischen Einzelantrieb angetrieben wird. Eine ähnliche Einrichtung ist auch aus der EP-754 252 zu entnehmen, wobei der elektromotorische Antrieb direkt im Rundkamm integriert ist.

Mit diesen Einrichtungen ist es möglich, anhand von vorgegebenen Steuerungsprogrammen unterschiedliche Umfangsgeschwindigkeiten des Rundkamms während eines Kämmzykluses durchzuführen. Diese speziell verwendeten elektromotorischen Einzelantriebe sind relativ teuer und bedürfen einer genauen elektronischen Steuerung, welche ein Abdriften der Winkelposition des Kammsegmentes gegenüber den übrigen am Kämmprozess teilnehmenden Aggregaten verhindert.

In der EP-754 252 wurde beschrieben, dass die pulsierenden Drehbewegungen durch mechanische Getriebe mit exzentrisch/elyptisch ausgebildeten Zahnrädern erzeugt wurden. Eine derartige Übersetzung mit exzentrisch gelagerten Zahnrädern ist z.B. aus der JP-PS-58-57529 aus den Figuren 4 und 5 zu entnehmen. Derartig ausgebildete Getriebeeinheiten mit exzentrisch gelagerten Zahnrädern oder elyptisch ausgebildeten Zahnrädern ermöglichen zwar die Erzielung einer pulsierenden Drehbewegung, jedoch ist die Anpassung an technologische Bedingungen und an sonstige Antriebsbedingungen beschränkt.

Das heisst, die Freiheitsgrade zur Beeinflussung der Drehbewegung des Rundkamms sind mit diesen mechanischen Einrichtungen beschränkt.

Der Erfindung stellt sich nunmehr die Aufgabe, einen mechanischen Antrieb für einen Rundkamm einer Kämmaschine derart auszugestalten, über welchen eine diskontinuierliche Drehbewegung des Rundkammes erzeugt werden kann, wobei die Drehzahl des Rundkammes über den grössten Teil seiner vollständigen Umdrehung variabel gestaltet werden kann.

Diese Aufgabe wird dadurch gelöst, dass der Antrieb des Rundkamms von einem im wesentlichen konstant umlaufenden Elektromotor über ein mechanisches Getriebe mit wenigstens einer Getriebestufe mit unrunden Antriebsmitteln erfolgt. Unrund bedeutet dabei, dass die äussere Kontur der Antriebsmittel von symmetrischen geometrischen Verhältnissen abweicht ( im Gegensatz zu elliptischen Zahnrädern, deren Kontur symmetrische Verhältnisse aufweisen ).

Es wird weiter vorgeschlagen, dass die unrunden Antriebsmittel mittels Übertragungsmitteln miteinander in Antriebsverbindung stehen. Dabei können diese Antriebsmittel aus Riemen gebildet werden, welche z.B. mit einem Profil versehen sind, das in die ebenfalls mit einem Profil versehene Aussenkontur der unrunden Antriebsmittel eingreift.

Als weitere Ausführungsform wird vorgeschlagen, dass die unrunden Antriebsmittel mit einem Zahnprofil versehen sind, und das Übertragungsmittel aus einem umlaufenden Kettenelement gebildet ist, das in die Zahnprofile eingreift.

Des weiteren wird vorgeschlagen, dass die unrunden Antriebsmittel als Zahnräder ausgebildet sind, die direkt miteinander im Eingriff stehen. Mit dieser Einrichtung ist es möglich eine Drehzahländerung, bzw. -anpassung des Rundkammes in jeder Drehwinkelstellung des Antriebsmittels abgestimmt auf deren Verzahnung während eines Umlaufes durchzuführen. Hingegen ist die Drehzahlanpassung bei Verwendung von unrunden Antriebsmitteln, die über ein Übertragungsmittel miteinander verbunden sind, durch die notwendige Umschlingung des Übertragungsmittels etwas eingeschränkt.

Aus der JP-OS 62-149922 ist eine Einrichtung bekannt, wobei unrunde Zahnräder für den Antrieb des Zangenaggregates verwendet werden. Dabei wird die Geschwindigkeit der Pendelbewegung modifiziert. Dies ist jedoch nicht vergleichbar mit einer speziellen Modifizierung einer Drehbewegung bei einem Rundkamm.

Um das Übersetzungsverhältnis relativ klein zu halten, wird vorgeschlagen, dass vorzugsweise zwei Getriebestufen mit unrunden Antriebsmitteln hintereinandergeschaltet sind, wobei auf der Abgangswelle der ersten Getriebestufe das Antriebsmittel der zweiten Getriebestufe drehfest befestigt ist. Diese Einrichtung gewährleistet einerseits eine kompakte und von den Abmessungen aus gesehen eine klein gehaltene Getriebestufe und andererseits eine geräuscharme Übersetzungsstufe.

Es wird weiter vorgeschlagen, dass die Abgangswelle der ersten Getriebestufe zwischen dem Abgangs-Antriebsmittel der ersten Stufe und dem Eingangs-Antriebsmittel der zweiten Stufe gelagert ist.

Weitere Vorteile sind anhand nachfolgender Ausführungsbeispiele aufgezeigt und beschrieben.

Es zeigen:
- Fig. 1: einen schematischen Getriebeplan mit einer erfindungsgemäss beanspruchten Getriebestufe
- Fig. 2: eine vergrösserte Darstellung der erfindungsgemäss beanspruchten Getriebestufe
- Fig. 3: eine schematische Seitenansicht der Getriebestufe nach Fig. 2
- Fig. 4: eine weitere Ausführungsform der Getriebestufe nach Fig. 3
- Fig. 5: eine weitere Ausführungsform der Getriebestufe nach Fig. 4
- Fig. 6: ein Diagramm mit einer möglichen Variante eines Verlaufes einer modifizierten Rundkammdrehzahl während eines Kammspieles,
- Fig. 7: eine schematische Darstellung eines Kammspiel-Ablaufes in Bezug auf die Zange, den Rundkamm und die Abreisszylinder,
- Fig. 8: eine Teilansicht einer schematischen Seitenansicht einer Kämmaschine im Bereich der Kämmwerkzeuge,
- Fig. 9: eine schematische Seitenansicht entsprechend Fig. 8 in einer weiteren Arbeitsposition.

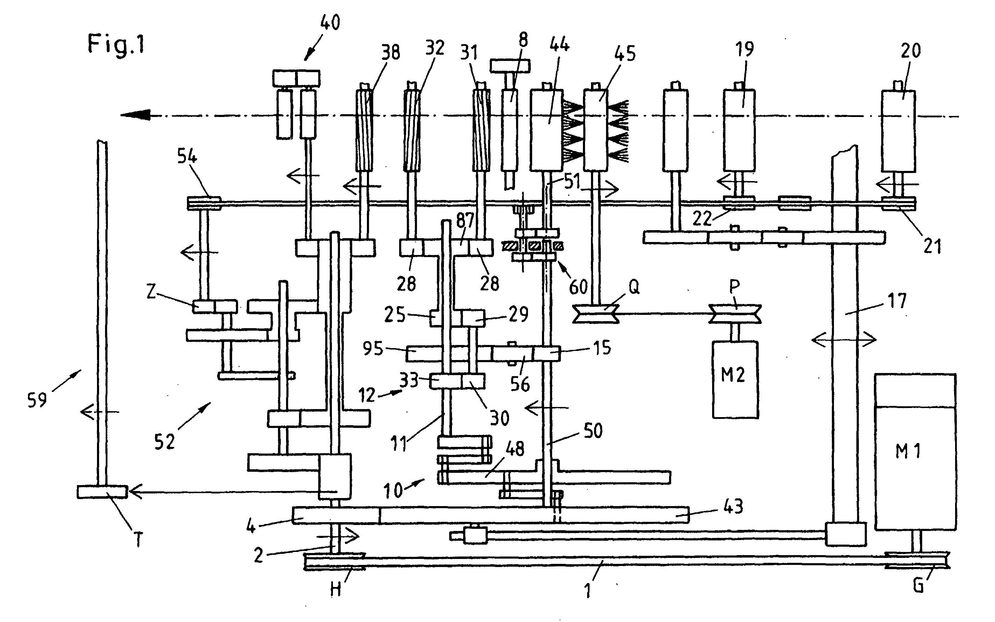

Fig. 1 zeigt schematisch den Aufbau eines Antriebsschemas für eine Kämmaschine. Der Antrieb erfolgt im wesentlichen über einen Hauptmotor M1, der die Antriebsleistung über eine Riemenscheibe G auf die Riemenscheibe H mittels eines Riemens 1 überträgt. Über die Welle 2, auf welcher die Riemenscheibe H drehfest angebracht ist, wird die Antriebsleistung auf ein Zahnrad 4 übertragen, welches ebenfalls drehfest auf der Welle 2 befestigt ist und mit einer Steuerscheibe 43 in Antriebsverbindung steht. Die Steuerscheibe 43, die auf ihrem Aussenumfang einen Zahnkranz aufweist, ist drehfest auf einer Welle 50 befestigt. Ebenfalls drehfest ist auf dieser Welle eine Schwinge 48 befestigt, welche über einen Koppeltrieb 10 eine Welle 11 eines schematisch dargestellten Planetengetriebes 12 antreibt. Das Stegrad 95 des Planetengetriebes 12 wird über ein Zahnrad 15 und ein Zwischenrad 56 angetrieben. Das Zahnrad 15 ist dabei drehfest auf der Welle 50 angebracht. Die im Stegrad 95 gelagerten Planetenräder 30,29 wälzen sich auf den Sonnenrädern 30, bzw. 25 ab. Diese modifizierte Antriebsbewegung (konstanter Antrieb über das Stegrad 95, diskontinuierlicher Antrieb über den Koppeltrieb 10) wird über das Zahnrad 87, das jeweils mit einem Zahnrad 28 in Antriebsverbindung steht, auf die drehfest mit den Zahnrädern 28 verbundenen Abreisszylinder 31, bzw. 32 übertragen. Die Abreisszylinder 31,32 führen während einem Kammspiel eine Pilgerschrittbewegung durch.

Über weitere schematisch dargestellte Getriebestufen 52 wird ein Abzugszylinder 38 sowie das Abzugswalzenpaar 40 angetrieben. Ausgehend von dieser Getriebestufe 52 erfolgt über einen Kettenantrieb 54 über die Kettenräder 21,22 der Antrieb der Wickelwalzen 19 und 20, welche für das Abwickeln des Wattewickels während des Kämmprozesses zuständig sind.

Über einen weiteren schematisch angedeuteten Abtrieb 59 werden die übrigen Aggregate (z.B. Streckwerk, Kannenablage usw.) angetrieben.

Eine detailliertere Beschreibung des Planetengetriebes zum Antrieb der Abreisswalzen ist z.B. auch aus der CH-PS 499 635 zu entnehmen.

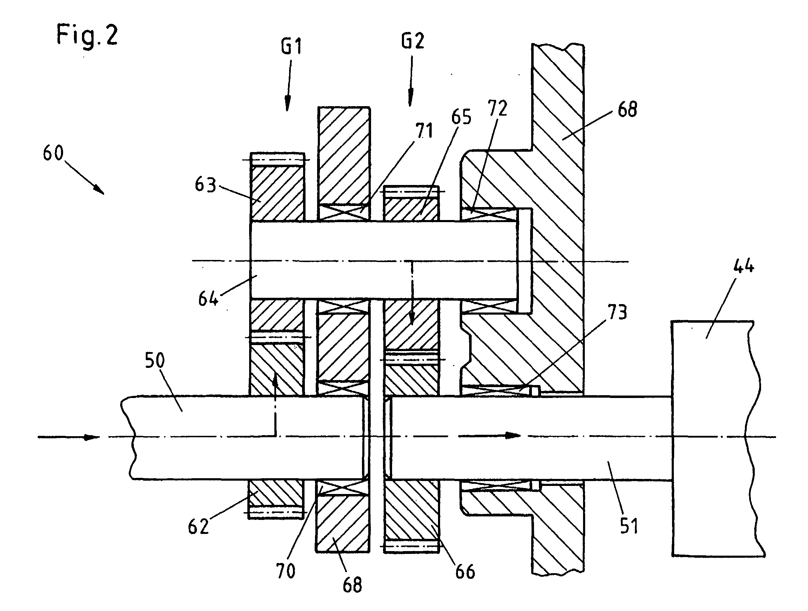

Schematisch dargestellt ist auch ein Schubkurbelantrieb der Welle 17, über welche die Hin- und Herbewegung des Zangenaggregates durchgeführt wird. In Verlängerung der Antriebswelle 50 ist zwischen dem Rundkamm 44 eine Getriebestufe 60 zwischengeschaltet, welche in vergrösserter Darstellung in Fig. 2 näher gezeigt und beschrieben ist. Die von der Getriebestufe 60 ausgehende und zum Rundkamm 44 führende Welle ist mit 51 gekennzeichnet.

Zur Reinigung des Kammsegmentes 46 des Rundkammes 44 ist eine Bürstenwalze 45 angeordnet, die über einen Riementrieb mit den Riemenscheiben P,Q von einem separaten Elektromotor M2 angetrieben werden. Zwischen dem Rundkamm 44 und dem hinteren Abreisszylinder 31 ist eine Speisewalze 8 angedeutet, welche, wie bekannt, durch die Bewegung des Zangenaggregates intermittierend angetrieben wird.

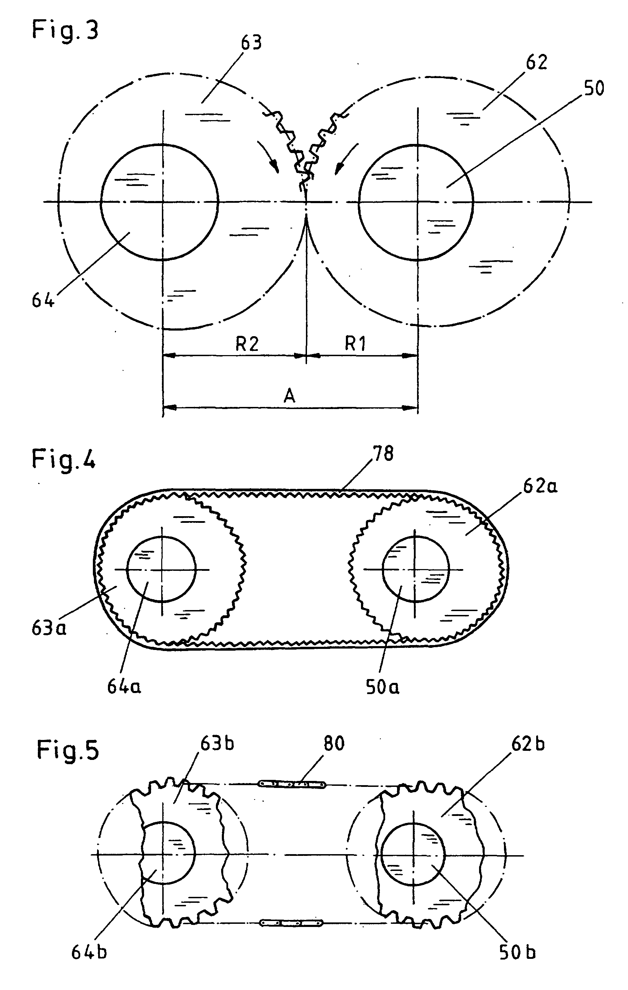

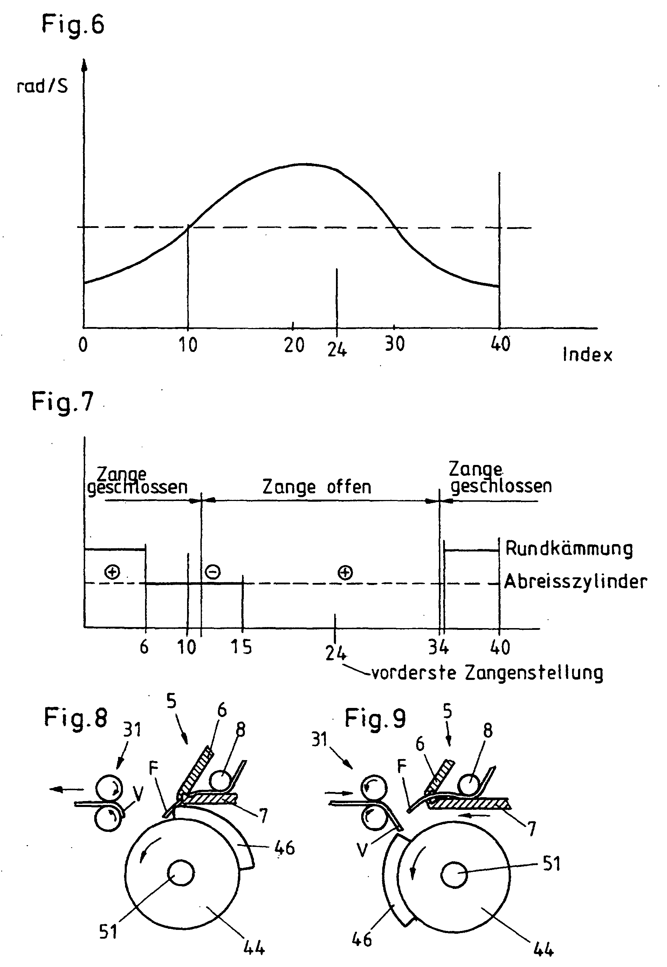

Wie aus Fig. 2 in Verbindung mit Fig. 3 zu entnehmen, besteht das Zwischengetriebe 60 aus einzelnen Getriebeübersetzungen (in diesem Fall zwei) mit unrunden Zahnradpaaren. Wie aus. Fig. 3 ersichtlich, ergibt sich die jeweilige Übersetzung aus der entsprechenden Winkelstellung der Zahnräder 62,63 mit den jeweiligen Teilkreisradien R1,R2. Der Achsabstand A der Zahnräder 62 und 63 bleibt konstant. Das unrunde Zahnrad 62 ist drehfest auf der Welle 50 befestigt, wobei die Welle 50 an ihrem freien Ende über eine Lagerung 70 im Maschinenrahmen 68 gelagert ist. Das Zahnrad 63 ist drehfest auf einer Welle 64 befestigt, welche über ein Lager 71 und 72 ebenfalls im Maschinenrahmen 68 gelagert ist. Zwischen den beiden Lagern 71 und 72 ist auf der Welle 64 ein weiteres Zahnrad 65 drehfest befestigt, das mit einem Zahnrad 66 in Antriebsverbindung steht. Das Zahnrad 66 ist drehfest auf einer Welle 51 befestigt, die über ein Lager 73 im Maschinenrahmen 68 gelagert ist. Die Welle 51 ist gleichzeitig die Antriebsachse für den Rundkamm 44 der schematischen Fig. 2 dargestellt wurde. Die Ausbildung der unrunden Zahnradpaare 62,63 und 65,66 kann gleich gestaltet sein. Daraus resultiert, dass an jeder Übersetzungsstufe gleiche Übersetzungsverhältnisse vorliegen. Es wäre jedoch auch denkbar, nur eine Übersetzungsstufe mit einem Zahnradpaar anzubringen. Die Verwendung von zwei Übersetzungsstufen ergibt jedoch eine kompakte Ausführung der Getriebeeinheit, welche einerseits geräuscharm und andererseits in ihren masslichen Dimensionen relativ klein gehalten werden kann. Mit dieser Getriebestufe 60 ist es möglich, eine diskontinuierliche Drehbewegung des Rundkammes während eines Kammspieles zu erzeugen, welche z.B. im Diagramm der Fig. 6 gezeigt wird. Dabei wird eine Umdrehung des Rundkammes in 40 Indexe unterteilt, wobei etwa bei Index 24 sich das Zangenaggregat in geringstem Abstand zu den nachfolgenden Abreisszylindern befindet. In dieser vorderen Stellung ist die Zange vollständig geöffnet und überführt den aus der Zange herausragenden und zuvor ausgekämmten Faserbart F auf das von den Abreisszylindern teilweise zurückbeförderte Wattevliesende V für den Abreiss-, bzw. den nachfolgenden Lötvorgang.

Ein derartiges Diagramm, wo die zuvor beschriebenen Bewegungsabläufe aufgezeigt werden, ist z.B. auch aus der Literaturstelle: Textile Institute "Handbuch der textilen Fertigung - Die Kurzstapelspinnerei / Band 3: Kämmerei, Strecken, Flyer" von W. Klein auf Seite 31 zu entnehmen.
In den Figuren 8 und 9 ist jeweils ein Zangenaggregat 5 schematisch gezeigt, das mit einer Oberzange 6 und einer unteren Zangenplatte 7 versehen ist. Unterhalb dem Zangenaggregat 5 ist der Rundkamm 44 angeordnet, der mit einem Kammsegment 46 versehen ist. In der zusätzlichen Fig. 7 ist schematisch ein Zeitdiagramm gezeigt, woraus über einen Kammzyklus (40 Indexe) zu entnehmen ist, zu welchem Zeitpunkt die Zange geschlossen, bzw. offen ist, das Rundkammsegment 46 in den vorgelegten Faserbart F einsticht, bzw. zu welchem Zeitpunkt die Abreisszylinder das Faservliesende V in Richtung des Zangenaggregates 5 zurückbefördern (Fig. 9) oder in Abtransportrichtung entsprechend der Fig. 8 fördern. Wie aus Fig. 7 zu entnehmen, wird die Rundkämmung dann durchgeführt, während die Zange geschlossen ist (im vorliegenden Fall zwischen Index 35 und Index 6). Zwischen Index 6 und Index 15 erfolgt die Rückförderung des Faservliesendes V in Richtung des Zangenaggregates 5, um ein neues Faserpaket anzusetzen. Um zu vermeiden, dass das Kammsegment 46 in das zurückbeförderte Faservliesende V einsticht, ist es notwendig, die Drehzahl des Rundkammes derart zu modifizieren, so dass es zu keiner Kollision zwischen dem zurückbeförderten Faservliesende V und dem Rundkammsegment 46 kommt. Durch das nochmalige Kämmen ( auch "Nachkämmen" genannt) des Fasergutes des Faservliesendes V könnte es sonst vorkommen, dass Gutfasern (lange Fasern), die nicht durch den Klemmpunkt der Abreisszylinder gehalten werden, durch das Rundkammsegment aus dem Faservliesende V herausgezogen und abgeschieden werden. Deshalb ist es notwendig, dass nach dem Kämmprozess (Fig. 8) das Rundkammsegment 46 möglichst schnell aus dem Bereich unterhalb der Abreisswalzen 31 entfernt wird.
Dies ist z.B. in der Fig. 9 dargestellt. Die Zange 5 bewegt sich dabei noch in Richtung der Abreisszylinder 31, während das Rundkammsegment 46 sich bereits unterhalb des Faservliesendes V befindet. Dies ist auch aus dem Diagramm nach Fig. 6 zu entnehmen, wobei im Anschluss an die Rundkämmung (Index 6) die Drehzahlkurve steil ansteigt, um dem zuvor geschilderten Umstand Rechnung zu tragen. Wie auch aus der Fig. 6 zu entnehmen, befindet sich die Drehzahl des Rundkammsegmentes während der Rundkämmung (zwischen Index 34 und Index 6) auf einem niedrigen Drehzahlniveau, so dass die Verweilzeit des Faserbartes F im Rundkammsegment 46 während des Kämmvorganges relativ lange ist, um eine gute Auskämmung zu erreichen.

Die Drehzahl des Rundkammsegmentes muss ausserdem auch genau auf die Bewegung des Zangenaggregates 5 abgestimmt sein, so dass es zu keiner Kollision der Unterzangenplatte 7 mit dem Kammsegment 46 kommt.

Durch die Verwendung der Getriebestufe 60 mit den unrunden Zahnrädern ist es möglich, die Geschwindigkeit des Kämmprozesses unabhängig von den Kammspielzahlen zu modifizieren und exakt auf die Bewegungen der Zange bzw. der Abreisszylinder auszurichten. Dies schafft Freiheitsgrade in vielen Richtungen, um eine optimale Kämmarbeit mit anschliessendem optimierten Löt- und Abreissvorgang zu gewährleisten.
Das zuvor beschriebene Beispiel stellt nur eine mögliche Ausführungsvariante dar. Je nach Anforderungen (technologisch oder maschinenbezogen) ist es möglich durch Auswahl entsprechender unrunder Antriebsmittel der Getriebestufe 60 andere Drehzahlkurven des Rundkammes zu realisieren.
Derartige Anpassungen zum Erzielen optimaler technologischer Bedingungen waren mit den bisherigen Einrichtungen nicht möglich, oder zum Teil nur möglich unter erheblichem finanziellen Aufwand.

In den Fig. 4 und 5 werden weitere Möglichkeiten gezeigt, wie eine derartige Antriebsstufe mit unrunden Antriebsmitteln ebenfalls ausgebildet werden kann. In Fig. 4 wird eine Einrichtung gezeigt, wobei die Übertragung der Antriebsleistung von den unrunden Antriebsmitteln über einen gezahnten Riemen 78 erfolgt, der in eine entsprechende Profilierung der unrunden Antriebsmittel 62a und 63a eingreift.

Fig. 5 zeigt ein weiteres Ausführungsbeispiel, wobei anstelle des Riemens 78 eine Kette 80 zur Übertragung der Antriebsleistung von dem unrunden Antriebsrad 62b auf das Antriebsrad 63b erfolgt. Die Lagerung der einzelnen Antriebsscheiben kann entsprechend dem Ausführungsbeispiel nach Fig. 3 erfolgen.

## Patentansprüche

1. Kämmaschine mit einem angetriebenen Zangenaggregat (5) und einem mit der Bewegung des Zangenaggregates synchronisiert und diskontinuierlich angetriebenen Rundkamm (44),
**dadurch gekennzeichnet, dass** der Antrieb des Rundkammes (44) von einem im wesentlichen konstant umlaufenden Elektromotor (M1) über ein mechanisches Getriebe mit wenigstens einer Getriebestufe (60), mit unrunden Antriebsmitteln (62,63,65,66) deren äussere Kontur von symmetrischen Konturen abweicht, erfolgt.

2. Kämmaschine nach Anspruch 1, **dadurch gekennzeichnet, dass** die unrunden Antriebsmittel (62a,63a,62b,63b) mittels Übertragungsmitteln (78,80) miteinander in Antriebsverbindung stehen.

3. Kämmaschine nach Anspruch 2, **dadurch gekennzeichnet, dass** die Übertragungsmittel Riemen (78) sind.

4. Kämmaschine nach Anspruch 3, **dadurch gekennzeichnet, dass** die Riemen (78) mit einem Profil versehen sind, das in die Aussenkontur der unrunden Antriebsmittel (62a,63a) eingreift, welche mit einem gleichartigen Profil versehen sind.

5. Kämmaschine nach Anspruch 2, **dadurch gekennzeichnet, dass** die unrunden Antriebsmittel (62b,63b) mit einem Zahnprofil versehen sind und das Übertragungsmittel aus einem Kettenelement (80) gebildet ist, in das die Zahnprofile eingreifen.

6. Kämmaschine nach Anspruch 1, **dadurch gekennzeichnet, dass** die unrunden Antriebsmittel als Zahnräder (62,63,65,66) ausgebildet sind, die miteinander in Eingriff stehen.

7. Kämmaschine nach einem der Ansprüche 1 bis 6, **dadurch gekennzeichnet, dass** vorzugsweise zwei Getriebestufen (G1,G2) mit unrunden Antriebsmitteln (62,63,65,66) hintereinander geschaltet sind, wobei auf der Abgangswelle (64) der ersten Getriebestufe (G1)das Antriebsmittel (65) der zweiten Getriebestufe (G2) drehfest befestigt ist.

8. Kämmaschine nach einem der Ansprüche 1 bis 7, **dadurch gekennzeichnet, dass** die Abgangswelle (64) der ersten Getriebestufe (G1) zwischen dem Abgangs-Antriebsmittel (63) der ersten Stufe (G1) und dem Eingangs-Antriebsmittel (65) der zweiten Stufe (G2) gelagert ist.

9. Kämmaschine nach einem der Ansprüche 1 bis 7, **dadurch gekennzeichnet, dass** die Eingangswelle (50) der ersten Getriebestufe (G1) zwischen dem Eingangs-Antriebsmittel (62) der ersten Stufe (G1) und dem Abgangs-Antriebsmittel (66) der zweiten Getriebestufe (G2) gelagert ist.

## Claims

1. Combing machine with a driven nipper unit (5) and a circular comb (44), synchronised with the movement of the nipper unit and driven in a discontinuous manner,
**characterised in that** the drive for the circular comb (44) is effected by an electric motor (M1) which circulates essentially constantly by means of a mechanical gear system with at least one gear stage (60), with out-of-round drive means (62,63,65,66), of which the outer contour deviates from symmetrical contours.

2. Combing machine according to Claim 1, **characterised in that** the out-of-round drive means (62a,63a,62b,63b) are in drive connection with each other by way of transfer means (78,80).

3. Combing machine according to Claim 2, **characterised in that** the transfer means are belts (78).

4. Combing machine according to Claim 3, **characterised in that** the belts (78) are provided with a profile which engages in the outer contour of the out-of round drive means (62a,63a), which are provided with a profile of the same kind.

5. Combing machine according to Claim 2, **characterised in that** the out-of-round drive means (62b,63a) are provided with a toothed profile and the transfer means are formed from a chain element (80), into which the toothed profiles engage

6. Combing machine according to Claim 2, **characterised in that** the out-of-round drive means are designed as toothed wheels (62,63,65,66) which are in engagement with each other.

7. Combing machine according to one of Claims 1 to 6, **characterised in that** for preference two gear stages (G1,G2) with out-of-round drive means (62,63,65,66) are connected one behind another, whereby on the output shaft (64) of the first gear stage (G1) the drive means (65) are secured in a torsionally-resistant manner to the second gear stage (G2).

8. Combing machine according to one of Claims 1 to 7, **characterised in that** the output shaft (64) of the first gear stage (G1) is mounted between the output drive means (63) of the first stage (G1) and the input drive means (65) of the second stage (G2).

9. Combing machine according to one of Claims 1 to 7, **characterised in that** the input shaft (50) of the first gear stage (G1) is mounted between the input drive means (62) of the first stage (G1) and the output drive means (66) of the second gear stage (G2).

## Revendications

1. Peigneuse avec un arrangement de pinces commandé (5) et un peigne circulaire (44) commandé d'une manière discontinue et synchronisée avec le mouvement de l'arrangement de pinces,
**caractérisée par le fait que**
l'entraînement du peigne circulaire (44) est effectué par un moteur électrique (M1) tournant d'une manière essentiellement constante, via un engrenage mécanique avec au moins une étape d'engrenage (60), ayant des moyens d'entraînement excentrés (62,63,65,66) dont le contour extérieur diffère des contours symétriques.

2. Peigneuse selon revendication 1,
**caractérisée par le fait que**
les moyens d'entraînement excentrés (62a,63a,62b,63b) se tiennent en liaison d'entraînement réciproque, à l'aide de moyens de transmission (78,80).

3. Peigneuse selon revendication 2,
**caractérisée par le fait que**
les moyens de transmission sont des courroies (78).

4. Peigneuse selon revendication 3,
**caractérisée par le fait que**
les courroies (78) sont pourvues d'un profil qui engrène dans le contour extérieur des moyens d'entraînement excentrés (62a,63a), lesquels sont pourvus d'un profil du même type.

5. Peigneuse selon revendication 2,
**caractérisée par le fait que**
les moyens d'entraînement excentrés (62b,63b) sont pourvus d'un profil denté, et le moyen de transmission est formé par un élément de chaîne (80) dans lequel engrènent les profils dentés.

6. Peigneuse selon revendication 1,
**caractérisée par le fait que**
les moyens d'entraînement excentrés sont formés comme pignons dentés (62,63,65,66) qui sont en engrenage l'un avec l'autre.

7. Peigneuse selon l'une des revendications 1 à 6,
**caractérisée par le fait que**,
de préférence, deux étapes d'engrenage (G1,G2), avec des moyens d'entraînement excentrés (62,63,65,66), sont montées l'une derrière l'autre, et où le moyen d'entraînement (65) de la deuxième étape d'engrenage (G2) est fixé d'une manière non rotative sur l'arbre de sortie (64) de la première étape d'engrenage (G1).

8. Peigneuse selon l'une des revendications 1 à 7,
**caractérisée par le fait que**
l'arbre de sortie (64) de la première étape d'engrenage (G1) est maintenu entre le moyen d'entraînement de sortie (63) de la première étape (G1) et le moyen d'entraînement d'entrée (65) de la deuxième étape (G2).

9. Peigneuse selon l'une des revendications 1 à 7,
**caractérisée par le fait que**
l'arbre d'entrée (50) de la première étape d'engrenage (G1) est maintenu entre le moyen d'entraînement d'entrée (62) de la première étape (G1) et le moyen d'entraînement de sortie (66) de la deuxième étape d'engrenage (G2).
